# FASCICULE DE BREVET EUROPEEN

(11) **EP 4 174 357 B1**
(45) Date de publication et mention de la délivrance du brevet: **22.05.2024**
(21) Numéro de dépôt: 22203709.5
(22) Date de dépôt: 26.10.2022
(51) Int. Cl.: F16L 59/14, F16L 59/065, F16L 59/18

(54) **ENSEMBLE DE CONNEXION OPTIMISÉ ENTRE DEUX PORTIONS D'UNE CANALISATION POUR LE TRANSPORT D'UN FLUIDE CRYOGÉNIQUE, COMPRENANT UNE CHAMBRE D'ISOLATION THERMIQUE ADDITIONNELLE ET UNE CHAMBRE D'EXPANSION DE FLUIDE**
OPTIMIERTE VERBINDUNGSANORDNUNG ZWISCHEN ZWEI ABSCHNITTEN EINER ROHRLEITUNG ZUM TRANSPORT EINES KRYOGENEN FLUIDS MIT EINER ZUSÄTZLICHEN WÄRMEDÄMMKAMMER UND EINER FLÜSSIGKEITSEXPANSIONSKAMMER
OPTIMIZED CONNECTION ASSEMBLY BETWEEN TWO PORTIONS OF A PIPE FOR TRANSPORTING A CRYOGENIC FLUID, COMPRISING AN ADDITIONAL THERMAL INSULATION CHAMBER AND A FLUID EXPANSION CHAMBER

(30) Priorité: 28.10.2021 FR 2111497
(43) Date de publication de la demande: 03.05.2023
(73) Titulaire: Airbus SAS, 31700 Blagnac (FR); Airbus Operations SAS, 31060 Toulouse (FR)
(72) Inventeur: PEDOUSSAUT, Philippe, 31700 BLAGNAC (FR); ERROUI, Najoua, 31060 TOULOUSE (FR); TRESSOL, Hervé, 31060 TOULOUSE (FR)
(74) Mandataire: Cabinet Le Guen Maillet

(56) Documents cités:
- FR-A1- 2 574 524
- JP-A- H11 153 290
- US-A- 4 491 347

## Description

### DOMAINE TECHNIQUE

La présente invention concerne un ensemble de connexion entre deux portions d'une canalisation de transport d'un fluide cryogénique. L'invention concerne notamment un ensemble de connexion pour une canalisation d'hydrogène liquide dans des systèmes d'aéronef.

### ÉTAT DE LA TECHNIQUE ANTÉRIEURE

L'hydrogène liquide est un fluide cryogénique qui peut être utilisé comme source d'énergie pour la production d'électricité. Ainsi, par exemple, il est possible d'utiliser une pile à hydrogène pour alimenter l'ensemble des systèmes de commande de vol et de communication d'un aéronef, ainsi que l'éclairage à bord et l'alimentation de différents dispositifs accessoires utilisés à bord de l'aéronef. L'hydrogène liquide peut également servir de source d'énergie pour la propulsion d'un aéronef, en alimentant une pile à combustible ou encore par combustion directe, ce qui présente l'avantage de ne rejeter que de l'eau dans l'atmosphère. L'utilisation d'hydrogène requiert des systèmes de distribution entre un ou des réservoirs de production ou de stockage et des dispositifs consommateurs. Ainsi des canalisations sont classiquement utilisées pour acheminer l'hydrogène liquide entre un réservoir de stockage et un dispositif consommateur tel que, par exemple, une pile à hydrogène. Les canalisations utilisées comprennent le plus souvent un tube intérieur, dans lequel circule le fluide transporté, et une paroi extérieure, séparée du tube intérieur par une ou plusieurs chambres d'isolation thermique placées sous vide. De telles canalisations, isolées thermiquement sous vide, sont des paires de tubes concentriques dans lesquelles les parois de tubes intérieur et extérieur sont maintenues à distance l'une de l'autre. Dans des canalisations adaptées au transport d'un fluide cryogénique pour le distribuer, le stocker et/ou autre, l'isolation thermique réalisée entre le tube intérieur et la paroi extérieure permet à la fois de conserver le fluide à une température adaptée à sa distribution (par exemple à -253°C, sous forme liquide) et d'éviter une formation de glace autour de la paroi extérieure, laquelle serait alors de nature à générer des contraintes mécaniques sur des éléments voisins de l'installation de distribution, du fait de l'accroissement progressif du volume de glace accumulée autour de la canalisation. Les canalisations de distribution de fluides cryogéniques sont fréquemment constituées d'une succession de tuyaux, flexibles ou rigides, isolés thermiquement sous vide, et assemblés entre eux au moyen d'éléments de connexion appropriés. C'est notamment le cas des canalisations utilisées pour le transfert d'oxygène liquide, d'azote liquide, d'argon liquide, d'hydrogène liquide, d'hélium liquide, par exemple. Les raccords (connexions) entre les différents tuyaux souples ou rigides qui composent la canalisation sont réalisés grâce à des couples de connecteurs. Chaque couple de connecteurs comprend un connecteur mâle agencé à l'extrémité d'un tuyau et configuré pour être inséré dans un connecteur femelle agencé à l'extrémité du tuyau voisin, et pour opérer une liaison mécanique coulissante serrée. L'étanchéité est obtenue simplement en utilisant un matériau à très faible expansion (coefficient de dilatation) pour le connecteur mâle et un matériau à bien plus forte expansion pour le connecteur femelle, de sorte que, lorsqu'un fluide cryogénique circule dans la canalisation, le connecteur femelle se rétracte sur le connecteur mâle pour opérer la liaison mécanique serrée à partir d'une liaison coulissante. L'étanchéité est renforcée par l'utilisation d'un ou plusieurs joints toriques placés entre les extrémités raccordées de deux tuyaux voisins. Un joint torique peut être disposé par exemple entre deux brides accolées respectivement disposées en retrait de l'embout mâle et à l'extrémité de l'embout femelle, ou encore entre l'extrémité de l'embout mâle et le fond de l'embout femelle. Ce type de jonction entre deux tuyaux voisins d'une même canalisation requiert toutefois que le connecteur mâle (ou embout mâle) soit inséré sur une grande longueur au regard du diamètre de la canalisation (jusqu'à plusieurs dizaines de centimètres) dans le connecteur femelle (ou embout femelle). Pour qu'une telle jonction soit étanche, les connecteurs mâle et femelle doivent, en plus d'être accouplés sur une longueur importante, être rigides. Une telle configuration n'est pas pratique dans le cas où une canalisation, et plus largement un système de distribution de fluide, doit être installé dans un espace restreint, comme c'est fréquemment le cas à bord d'un aéronef. De surcroît, une grande longueur d'insertion de l'embout mâle dans l'embout femelle implique de disposer d'un espace conséquent autour de la canalisation pour pouvoir procéder à la séparation de deux tuyaux voisins lors d'une opération de démontage.

La situation peut être améliorée.

Le document FR2574524A1 montre un dispositif pour relier des tubes de canalisations destinés au transport de fluides refroidis à basse température, ou bien pour le raccordement de robinetteries, de pièces d'obturation, etc..., à de tels tubes de canalisations, dispositif dans lequel les parties à relier sont enfichées l'une dans l'autre à la manière d'une liaison mâle femelle.

### EXPOSÉ DE L'INVENTION

Un objet de la présente invention est de proposer des moyens de connexion entre deux portions de canalisation pour le transport d'un fluide cryogénique ne présentant pas au moins certains des inconvénients des solutions existantes.

A cet effet, il est proposé un ensemble de connexion entre deux portions d'une canalisation pour le transport d'un fluide cryogénique, l'ensemble de connexion comprenant une première portion de canalisation et une deuxième portion de canalisation, la première portion de canalisation comprenant un embout mâle agencé pour être au moins partiellement inséré dans un embout femelle de la deuxième portion de canalisation, lesdits embouts mâle et femelle formant conjointement une liaison mécanique coulissante serrée, la première portion de canalisation étant réalisée dans un premier matériau présentant un coefficient de dilatation inférieur au coefficient de dilatation d'un deuxième matériau dans lequel est fabriquée la deuxième portion de canalisation, la première portion de canalisation comprenant une première chambre d'isolation thermique et la deuxième portion de canalisation comprenant une deuxième chambre d'isolation thermique, l'ensemble de connexion étant en outre tel qu'il comprend au moins une chambre supplémentaire d'isolation thermique, indépendante de chacune des première et deuxième chambres d'isolation thermique, et s'étendant entre la première et la deuxième chambres d'isolation thermique, et comprend en outre une chambre d'expansion du fluide cryogénique agencée autour de surfaces de contact entre la première portion de canalisation et la deuxième portion de canalisation, la chambre d'expansion étant reliée à un logement configuré pour le logement ou pour la connexion d'un capteur de présence dudit fluide cryogénique.

Avantageusement, cela permet d'obtenir des moyens de connexion moins encombrants et plus flexibles entre deux portions de canalisation pour le transport de fluide cryogénique, tel que de l'hydrogène liquide, par exemple, et ne requérant pas un important volume d'espace disponible pour pouvoir opérer un démontage de la connexion.

L'ensemble de connexion selon l'invention peut également comporter les caractéristiques suivantes, considérées seules ou en combinaison :
- La distance maximale d'insertion de l'embout mâle dans l'embout femelle est inférieure ou égale à 50 mm, préférentiellement inférieure ou égale à 20 mm.
- La chambre d'expansion de fluide comprend un élément fabriqué dans un matériau absorbant, préférentiellement spongieux.
- Au moins l'une parmi la première portion et la deuxième portion de canalisation présente une forme générale cylindrique et comprend des parois intérieure et extérieure qui présentent des ondulations, les ondulations de la paroi intérieure s'étendant sur un tronçon de canalisation présentant des ondulations de la paroi extérieure.

- Le premier matériau est de l'invar.
- Le deuxième matériau est de l'acier *stainless.*
- Un vide est créé dans chacune desdites chambres d'isolation thermique.
- Ledit logement est un volume terminal d'un conduit reliant ladite chambre d'expansion à l'extérieur de la canalisation.
- Chacune des portions de canalisation voit sa paroi extérieure s'évaser à son extrémité pour former une bride terminale de contact configurée pour être positionnée en regard de la bride terminale de contact de l'autre portion de canalisation parmi les deux portions de canalisation et dans lequel ledit logement est agencé à la base de l'une des deux brides terminales.

L'invention a également pour objet un système de distribution d'hydrogène liquide comprenant un ensemble de connexion tel que précédemment décrit.

Un autre objet de l'invention est un aéronef comprenant un ensemble de connexion entre deux portions de canalisation tel que précité ou un système de distribution d'hydrogène comprenant un tel ensemble.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue en perspective représentant globalement une connexion entre deux portions jointes d'une canalisation, selon un mode de réalisation ;
[Fig. 2] est une coupe verticale, en perspective, de la connexion entre deux portions d'une canalisation, déjà représentée sur la Fig. 1 ;
[Fig. 3] est une coupe verticale, en perspective, des détails de la connexion entre deux portions d'une canalisation, déjà représentée sur les Fig. 1 et Fig. 2 ;
[Fig. 4] est une coupe verticale, en perspective, illustrant une distance maximale d'insertion de l'embout mâle dans l'embout femelle de la connexion entre deux portions d'une canalisation, déjà représentée sur les Fig.1, Fig. 2 et Fig. 3, et,
[Fig. 5] illustre une vue de dessus d'un aéronef comprenant un ensemble de connexion entre deux portions d'une canalisation, tel que déjà illustré sur les figures Fig. 1 à Fig. 4.

### EXPOSÉ DÉTAILLÉ DE MODES DE RÉALISATION

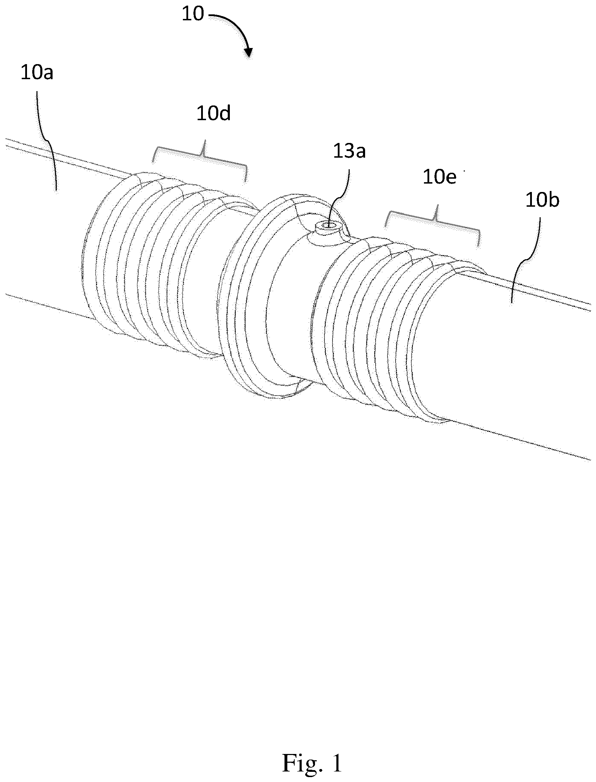

La Fig. 1 représente de façon schématique et globale, un ensemble de connexion 10 entre une première portion 10a d'une canalisation et une deuxième portion 10b de cette même canalisation, selon un mode de réalisation. Les portions de canalisation 10a et 10b comprennent chacune une portion de tube intérieur pour la circulation d'un fluide et une chambre d'isolation thermique (non visibles sur la Fig. 1).

Selon un mode de réalisation, la canalisation représentée est configurée pour le transport d'un fluide cryogénique et comprend d'autres portions de canalisation que les portions 10a et 10b. Selon l'exemple décrit, la canalisation représentée est configurée pour le transport d'hydrogène liquide et plus précisément pour la distribution d'hydrogène liquide à bord d'un aéronef. Le terme « fluide cryogénique » désigne dans la présente description un gaz liquéfié conservé à basse température ou un gaz obtenu à partir d'un tel liquide, du fait de son évaporation. Ainsi, par exemple, lorsque le fluide cryogénique est de l'hydrogène (ou plus précisément du dihydrogène H2), le terme fluide cryogénique désigne aussi bien l'hydrogène liquide que l'hydrogène gazeux et la présente invention s'applique donc aussi bien à l'hydrogène liquide qu'à l'hydrogène gazeux quand le fluide cryogénique est de l'hydrogène. Les portions de la canalisation autres que les portions 10a et 10b ne sont pas représentées ici dans la mesure où l'invention porte sur un ensemble de connexion entre deux portions voisines d'une même canalisation, connectées l'une à l'autre, et que la description de l'une seulement des connexions entre deux portions de la canalisation voisines l'une de l'autre est nécessaire à une bonne compréhension de l'invention.

Le terme « connexion » est à interpréter ici comme synonyme de jonction, de liaison, de branchement ou de raccordement étanche des deux portions 10a et 10b de la canalisation de distribution d'hydrogène liquide.

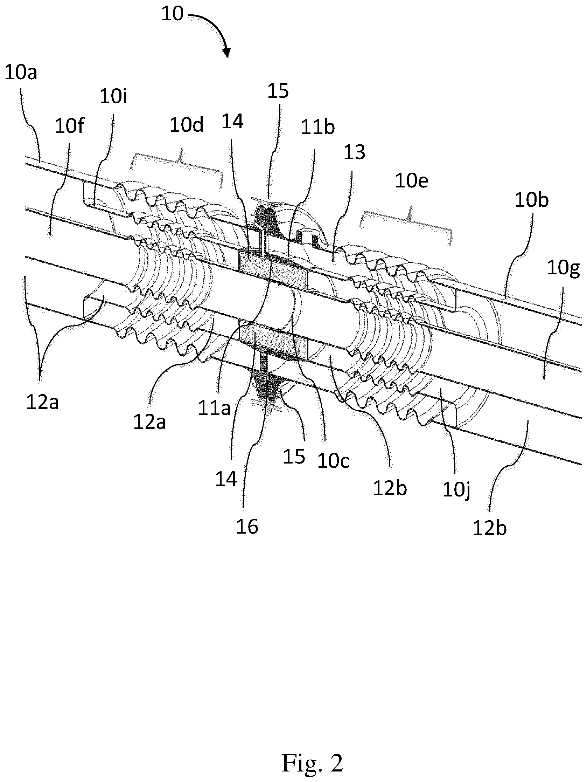

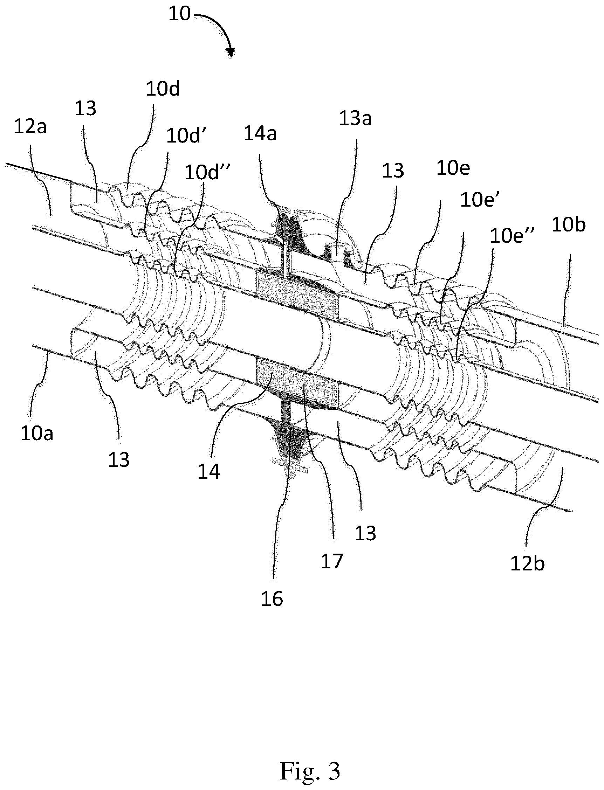

Selon un mode de réalisation, les portions de canalisations 10a et 10b sont tubulaires et comprennent deux tubes concentriques maintenus à distance l'un de l'autre, par exemple par des entretoises positionnées à intervalles réguliers entre le tube intérieur et la paroi tubulaire extérieure de la canalisation. Plus précisément, les portions de canalisation 10a et 10b comprennent chacune un tube intérieur de transport de fluide entouré d'une chambre d'isolation thermique annulaire délimitée par une paroi extérieure globalement tubulaire, la chambre comprenant des entretoises de maintien du tube intérieur par rapport à la paroi extérieure de la canalisation. Ainsi la portion de canalisation 10a comprend une chambre d'isolation thermique 12a (non visible sur la Fig. 1) et la portion de canalisation 10b comprend une chambre d'isolation thermique 12b (non visible sur la Fig. 1). Des ondulations 10d et 10e sont respectivement agencées sur la paroi extérieure de la portion 10a et de la portion 10b de l'ensemble de connexion 10, de sorte à créer une flexibilité de l'ensemble de connexion 10, conjointement avec des ondulations du tube intérieur positionnées sur les mêmes tronçons de canalisation (visibles sur les Fig. 2 et Fig. 3). La flexibilité ainsi obtenue permet de faciliter les opérations d'assemblage et de désassemblage de la connexion des deux portions 10a et 10b de l'ensemble de connexion 10. Une ouverture de mise sous vide 13a permet d'opérer une mise sous vide d'une chambre supplémentaire d'isolation thermique 13 (visible sur la Fig. 2) configurée pour opérer une isolation thermique de l'ensemble de connexion, autour de la connexion des portions 10a et 10b. Selon un mode de réalisation, une mise sous vide de la chambre supplémentaire 13 d'isolation thermique, ainsi que des chambres d'isolation thermique 12a et 12b des portions 10a et 10b de canalisation est obtenue au moyen d'au moins une pompe à vide connectée à l'ouverture de mise sous vide de chacune des chambres, laquelle ouverture est ensuite obturée.

La Fig. 2 est une coupe verticale de l'ensemble de connexion 10 des deux portions 10a et 10b de canalisation. Le plan de coupe vertical comprend l'axe longitudinal de l'ouverture de mise sous vide 13a. La coupe en perspective de la Fig. 2 illustre des détails de l'ensemble de connexion 10 des deux portions 10a et 10b de canalisation. La portion 10a de canalisation comprend un tube intérieur 10f destiné à contenir de l'hydrogène liquide en vue de sa distribution à travers la canalisation. Le tube intérieur 10f est concentrique avec la paroi extérieure globalement tubulaire de la portion 10a de canalisation. La portion 10b de canalisation comprend quant à elle un tube 10g intérieur destiné à contenir l'hydrogène liquide en vue de sa distribution, prévu et configuré pour assurer une continuité de distribution avec le tube intérieur 10f de la portion 10a de canalisation. Le tube intérieur 10g de la portion 10b de canalisation est concentrique avec la paroi extérieure globalement tubulaire de la portion 10b de canalisation. Les termes « paroi globalement tubulaire » désignent ici une paroi de canalisation de forme générale tubulaire mais susceptible de comprendre des ondulations sur certains tronçons en vue de lui conférer une certaine souplesse et une certaine flexibilité. L'extrémité du tube intérieur 10f, située du côté de la portion 10a de canalisation qui a vocation à être connectée à la portion 10b de canalisation, présente un diamètre légèrement inférieur au diamètre de l'extrémité du tube intérieur 10g située du côté de la portion 10b de canalisation destinée à être connectée à la portion 10a de canalisation. Ainsi, lors de l'assemblage de la connexion entre les portions 10a et 10b de canalisation, l'extrémité du tube intérieur 10f est insérée dans l'extrémité du tube intérieur 10g. En d'autres termes, l'extrémité du tube intérieur 10f constitue un embout mâle qui vient s'insérer dans l'extrémité du tube intérieur 10g. Les extrémités des tubes intérieurs 10f et 10g forment conjointement une liaison coulissante serrée étanche. Pour ce faire, le coefficient d'expansion du matériau dans lequel est fabriqué le tube intérieur 10f est très inférieur au coefficient d'expansion du matériau dans lequel est fabriqué le tube intérieur 10g. Selon un mode de réalisation de l'invention, le matériau dans lequel est fabriqué le tube intérieur 10f est de l'invar et le matériau dans lequel est fabriqué le tube intérieur 10g est un acier dit *stainless* (de l'anglais, et qui signifie « inoxydable »). Avantageusement, lorsque de l'hydrogène liquide occupe les tubes intérieurs 10f et 10g des portions de canalisation 10a et 10b, la température très basse de l'hydrogène liquide rétracte l'extrémité du tube 10g sur l'extrémité du tube 10f et renforce la liaison coulissante serrée pour obtenir une liaison serrée sans jeu fonctionnel, étanche. Les surfaces de contact 10c entre les deux extrémités des tubes intérieurs 10f et 10g sont contraintes l'une contre l'autre, avec une pression mécanique importante, puisque l'invar ne se rétracte quasiment pas au froid et que l'acier *stainless* de l'extrémité femelle se rétracte de façon franche sur l'extrémité mâle, eu égard à la disparité de coefficients d'expansion thermique entre les deux matériaux utilisés.

De plus, un embout mâle 11a est agencé dans le prolongement de la chambre d'isolation thermique 12a de la portion 10a de l'ensemble de connexion 10, et un embout femelle 11b est agencé dans le prolongement de la chambre d'isolation thermique 12b de la portion 10b de l'ensemble de connexion 10. Ces deux embouts 11a et 11b coopèrent comme les extrémités des tubes intérieurs 10f et 10g, c'est-à-dire que l'embout mâle 11a est réalisé dans un matériau présentant un coefficient d'expansion bien plus faible que le matériau dans lequel est réalisé l'embout femelle 11b, de sorte que l'embout femelle 11b se rétracte sur l'embout mâle 11a pour opérer une liaison serrée étanche lorsqu'un liquide cryogénique tel que de l'hydrogène liquide est présent dans la canalisation. Selon un mode de réalisation de l'invention, la portion 10a de canalisation est fabriquée en invar et la portion 10b de canalisation est fabriquée en acier *stainless.* Avantageusement, une portion quelconque de canalisation rejoignant deux ensembles de connexion voisins l'un de l'autre est constituée de deux éléments rendus solidaires, dont l'un est en invar et l'autre est en acier *stainless,* de sorte que le principe appliqué de rétractation par le froid pour obtenir une liaison mécanique serrée étanche puisse être utilisé pour plusieurs ensembles de connexion successifs d'une même canalisation.

Une cloison intermédiaire 10i s'étend entre la paroi extérieure de la portion 10a de canalisation et le tube intérieur 10f de la portion 10a de canalisation, délimitant la chambre d'isolation thermique 12a entre le tube intérieur et la paroi extérieure de la portion 10a de canalisation, du côté de la portion 10a de canalisation où se situe l'ensemble de connexion 10. De façon similaire, une cloison intermédiaire 10j s'étend entre la paroi extérieure de la portion 10b et le tube intérieur 10g de la portion 10b de canalisation, délimitant une chambre d'isolation thermique 12b entre le tube intérieur et la paroi extérieure de la portion 10b de canalisation, du côté de la portion 10b de canalisation où se situe l'ensemble de connexion 10. Chaque portion de canalisation, telle que par exemple les portions 10a et 10b comprennent une cloison interne intermédiaire à chacune de ses extrémités, proche d'un ensemble de connexion, le cas échéant. Les deux cloisons 10i et 10j de chacune des portions de canalisation délimitent une chambre d'isolation thermique supplémentaire 13 entre le tube intérieur de transport de l'hydrogène liquide et la paroi extérieure dont la surface externe est au contact de l'environnement extérieur immédiat de la canalisation de distribution. Selon un mode de réalisation, chacune des portions 10a et 10b de canalisation voit sa paroi extérieure s'évaser à son extrémité pour former une bride terminale de contact configurée pour être positionnée en regard de la bride terminale de contact de l'autre portion de canalisation parmi les portions 10a et 10b de canalisation. Les brides terminales de contact sont configurées pour être ceinturées par une bride ou un collier 15 de maintien de la connexion entre les deux portions 10a et 10b de canalisation. L'une au moins des brides terminales de contact comprend une gorge pour le logement d'un joint torique 16 d'étanchéité compatible avec des températures très basses d'un fluide cryogénique tel que de l'hydrogène liquide. Astucieusement, une chambre d'expansion de fluide cryogénique 14 est agencée de part et d'autre des surfaces de contact entre les embouts mâle et femelle respectivement disposés aux extrémités des tubes intérieurs 10f et 10g, et une chambre supplémentaire d'isolation thermique 13 est agencée entre les cloisons internes intermédiaires 10i et 10j et les parois extérieures des portions 10a et 10b, de sorte à isoler thermiquement la portion de canalisation comprenant la chambre d'expansion de fluide cryogénique 14. Un conduit 14a (visible sur la Fig. 3) est agencé entre la chambre d'expansion 14 et l'extérieur de la canalisation. Selon un mode de réalisation, l'ouverture du conduit 14a qui débouche sur l'extérieur de la canalisation comprend un logement pour la fixation d'un capteur de détection de présence d'hydrogène. Selon l'exemple décrit, l'ouverture du conduit 14a est configurée pour le logement ou la fixation d'un capteur configuré pour détecter une présence d'hydrogène liquide dans la chambre d'expansion 14. Un tel logement permet le montage d'un capteur de détection d'hydrogène de sorte que tout ou partie du capteur soit inséré dans la canalisation et puisse détecter de l'hydrogène en provenance de la chambre d'expansion 14. Selon un exemple, la paroi extérieure de la canalisation comprend un usinage et un filetage conjointement adaptés au montage d'un capteur de détection d'hydrogène, liquide ou gazeux. Selon un mode de réalisation, le montage est avantageusement de type « montage gaz » pour prévenir toute fuite de l'hydrogène vers l'extérieur de la canalisation. Un conduit 14a relie la chambre d'expansion 14 et le logement prévu pour le montage d'un capteur de détection de présence d'hydrogène. Avantageusement, le logement est un volume terminal du conduit 14a reliant ladite chambre d'expansion et l'extérieur de la canalisation (en l'absence du capteur). Une présence d'hydrogène liquide dans la chambre d'expansion 14 de la canalisation d'hydrogène signifie qu'une fuite existe au niveau de la connexion des tubes intérieurs 10f et 10g, ce qui est potentiellement préjudiciable au bon fonctionnement des systèmes et/ou à la sécurité. Avantageusement, le fait de pouvoir détecter rapidement une fuite d'hydrogène liquide au niveau de la jonction entre les embouts mâle et femelle des tubes intérieurs 10f et 10g, grâce à un capteur de détection de présence d'hydrogène, permet d'agir sans délai sur l'approvisionnement en hydrogène de la canalisation. Ainsi, il est par exemple possible de contrôler la fermeture d'une vanne située dans la canalisation, en amont de l'ensemble de connexion 10, pour limiter la quantité de fluide distribué dans la canalisation, et par voie de conséquence la quantité de fluide qui pourrait s'échapper du tube intérieur en présence d'une fuite au niveau de la connexion entre les tubes intérieurs 10f et 10g de la canalisation.

Selon un mode de réalisation, la chambre d'expansion 14 de fluide contient un élément absorbant 17 (visible sur la Fig. 3) fabriqué en matériau absorbant, préférentiellement spongieux, pour opérer une fonction de tampon et maintenir le fluide dans la chambre d'expansion.

Selon une variante du mode de réalisation, un capteur de détection de présence d'hydrogène est inséré directement dans la chambre d'expansion 14, et le logement agencé à l'endroit où débouche le conduit 14a reliant la chambre d'expansion vers l'extérieur de la canalisation est alors configuré pour recevoir des moyens de connexion électrique du capteur (alimentation électrique vers le capteur et signal en provenance du capteur) ou pour un passage de câbles au travers d'un obturateur étanche.

La Fig. 3 illustre le détail d'ondulations 10d'et 10d" respectivement agencées sur la paroi interne intermédiaire 10i, et sur le tube intérieur 10f de la portion 10a de canalisation, ainsi que le détail d'ondulations 10e' et 10e" respectivement agencées sur la paroi interne intermédiaire 10j et sur le tube intérieur 10g de la portion 10b de canalisation. Les ondulations 10d, 10d'et 10d" s'étendent sur des tronçons communs de chacune des parois de la portion 10a de canalisation (extérieure, interne intermédiaire et intérieure) permettant d'offrir un niveau de flexibilité de la portion 10a de canalisation plus important qu'avec un raccord à baïonnette selon l'art antérieur. Il en est de même pour les ondulations 10e, 10e' et 10e" qui s'étendent sur des tronçons communs de chacune des parois de la portion 10b de la canalisation (extérieure, interne intermédiaire et intérieure) permettant d'offrir un niveau de flexibilité de la portion 10b de canalisation plus important qu'avec un raccord à baïonnette selon l'art antérieur.

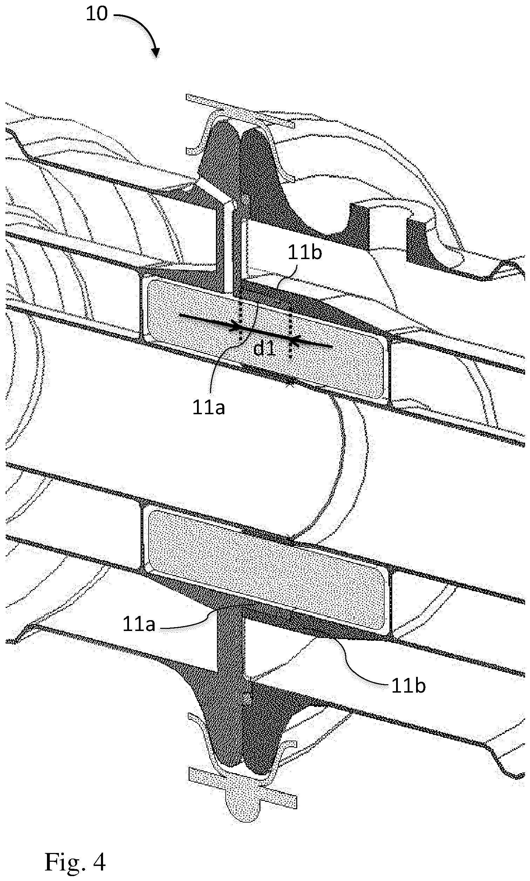

La Fig. 4 illustre une distance d1 maximale d'insertion de l'embout mâle 11a dans l'embout femelle 11b inhérente à la structure de ces embouts et plus largement à la structure des portions 10a et 10b de canalisation. Avantageusement, du fait de l'utilisation d'une chambre d'expansion permettant de retenir et de détecter une fuite, cette distance maximale d1 de l'embout mâle 11a dans l'embout femelle 11b peut être inférieure ou égale à 50 mm, et préférentiellement inférieure ou égale à 20 mm. En effet, si le risque de fuite est plus conséquent lorsque la distance d'insertion de la liaison coulissante serrée est plus courte qu'avec un raccord baïonnette, une détection de fuite peut être opérée immédiatement par un capteur logé à l'extrémité du conduit 14a et des actions consécutives à la fuite peuvent être opérées sans délai. Par exemple, il est possible de contrôler la fermeture d'une vanne de la canalisation et d'opérer une distribution d'hydrogène liquide par le biais d'une autre canalisation du système de distribution d'hydrogène.

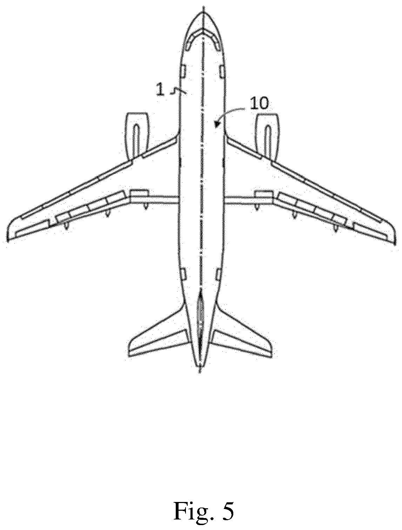

La Fig. 5 représente un aéronef 1 comprenant une pile à hydrogène et un système de distribution d'hydrogène liquide comprenant l'ensemble de connexion 10 ainsi que d'autres ensembles de connexion similaires à l'ensemble de connexion 10. Avantageusement, l'usage de tels ensembles de connexion, pareils à l'ensemble de connexion 10 permet l'installation d'un système de distribution d'hydrogène liquide, entre un réservoir de stockage d'hydrogène et la pile à combustible de l'aéronef 1, y compris dans des endroits exigus, puisque les ensembles de connexion sont flexibles et que le montage et le démontage de ces derniers ne requièrent pas un grand espace disponible autour de chacun des ensembles de connexion. Ceci est particulièrement avantageux à bord d'un aéronef.

## Revendications

1. Ensemble de connexion (10) entre deux portions (10a, 10b) d'une canalisation pour le transport d'un fluide cryogénique, l'ensemble de connexion (10) comprenant une première portion (10a) de canalisation et une deuxième portion (10b) de canalisation, la première portion (10a) de canalisation comprenant un embout mâle (11a) agencé pour être au moins partiellement inséré dans un embout femelle (1 1b) de la deuxième portion (10b) de canalisation, lesdits embouts mâle (11a) et femelle (11b) formant conjointement une liaison mécanique coulissante serrée, la première portion (10a) de canalisation étant réalisée dans un premier matériau présentant un coefficient de dilatation inférieur au coefficient de dilatation d'un deuxième matériau dans lequel est fabriquée la deuxième portion (10b) de canalisation, la première portion (10) de canalisation comprenant une première chambre d'isolation thermique (12a) et la deuxième portion (10b) de canalisation comprenant une deuxième chambre d'isolation thermique (12b), l'ensemble de connexion (10) étant **caractérisé en ce qu'**il comprend au moins une chambre supplémentaire (13) d'isolation thermique, indépendante de chacune des première (12a) et deuxième (12b) chambres d'isolation thermique, et s'étendant entre la première (12a) et la deuxième (12b) chambres d'isolation thermique et comprend en outre une chambre d'expansion (14) dudit fluide agencée autour de surfaces de contact (10c) entre la première portion (10a) de canalisation et la deuxième portion (10b) de canalisation, la chambre d'expansion (14) étant reliée, via un conduit (14a), à un logement configuré pour le logement ou pour la connexion d'un capteur de présence dudit fluide cryogénique.

2. Ensemble de connexion selon la revendication 1, dans lequel ladite chambre d'expansion du fluide (14) comprend un élément absorbant (17) configuré pour absorber ledit fluide.

3. Ensemble de connexion selon la revendication 1 ou 2, dans lequel l'une au moins parmi la première portion (10a) et la deuxième portion (10b) de canalisation présente une forme générale cylindrique et comprend des parois intérieures et extérieures présentant des ondulations (10d, 10d', 10d", 10e, 10e', 10e", les ondulations de la paroi intérieure s'étendant sur un tronçon de canalisation présentant des ondulations de la paroi extérieure.

4. Ensemble de connexion selon l'une des revendications précédentes, dans lequel le premier matériau est de l'invar et le deuxième matériau est de l'acier *stainless.*

5. Ensemble de connexion selon l'une quelconque des revendications précédentes, dans lequel un vide est créé dans chacune desdites chambres (12a, 12b, 13) d'isolation thermique.

6. Ensemble de connexion selon l'une quelconque des revendications précédentes, dans lequel la distance maximale (d1) d'insertion de l'embout mâle (11a) dans l'embout femelle (11b) est inférieure ou égale à 50 mm, préférentiellement inférieure ou égale à 20 mm.

7. Ensemble de connexion selon l'une quelconque des revendications précédentes, dans lequel ledit logement est un volume terminal d'un conduit (14a) reliant ladite chambre d'expansion à l'extérieur de la canalisation.

8. Ensemble de connexion selon l'une quelconque des revendications précédentes, dans lequel chacune des portions (10a, 10b) de canalisation voit sa paroi extérieure s'évaser à son extrémité pour former une bride terminale de contact configurée pour être positionnée en regard de la bride terminale de contact de l'autre portion de canalisation parmi les portions (10a, 10b) de canalisation et dans lequel ledit logement est agencé à la base de l'une des brides terminales.

9. Système de distribution d'hydrogène liquide comprenant un ensemble de connexion (10) selon l'une quelconque des revendications 1 à 8.

10. Aéronef (1) comprenant un ensemble de connexion (10) selon l'une des revendications 1 à 8 ou un système de distribution selon la revendication 9.

## Patentansprüche

1. Verbindungsanordnung (10) zwischen zwei Abschnitten (10a, 10b) einer Rohrleitung zum Transport eines kryogenen Mediums, wobei die Verbindungsanordnung (10) einen ersten Rohrleitungsabschnitt (10a) und einen zweiten Rohrleitungsabschnitt (10b) umfasst, wobei der erste Rohrleitungsabschnitt (10a) ein männliches Endstück (11a) umfasst, das dazu eingerichtet ist, mindestens teilweise in ein weibliches Endstück (11b) des zweiten Rohrleitungsabschnitts (10b) eingeführt zu werden, wobei die männlichen (11a) und weiblichen (11b) Endstücke gemeinsam eine mechanische Schiebesitzverbindung bilden, wobei der erste Rohrleitungsabschnitt (10a) aus einem ersten Material ausgeführt ist, das einen Ausdehnungskoeffizienten aufweist, der geringer als der Ausdehnungskoeffizient eines zweiten Materials ist, aus dem der zweite Rohrleitungsabschnitt (10b) hergestellt ist, wobei der erste Rohrleitungsabschnitt (10) eine erste Wärmeisolierungskammer (12a) umfasst und wobei der zweite Rohrleitungsabschnitt (10b) eine zweite Wärmeisolierungskammer (12b) umfasst, wobei die Verbindungsanordnung (10) **dadurch gekennzeichnet ist, dass** sie mindestens eine zusätzliche Wärmeisolierungskammer (13) umfasst, die von jeder der ersten (12a) und zweiten (12b) Wärmeisolierungskammern unabhängig ist und sich zwischen der ersten (12a) und der zweiten (12b) Wärmeisolierungskammer erstreckt, und ferner eine Ausdehnungskammer (14) für das Medium umfasst, die um Kontaktflächen (10c) zwischen dem ersten Rohrleitungsabschnitt (10a) und dem zweiten Rohrleitungsabschnitt (10b) herum eingerichtet ist, wobei die Ausdehnungskammer (14), über einen Kanal (14a), mit einer Aufnahme verbunden ist, die zum Aufnehmen oder zum Verbinden eines Sensors für das Vorhandensein des kryogenen Mediums ausgestaltet ist.

2. Verbindungsanordnung nach Anspruch 1, wobei die Ausdehnungskammer für das Medium (14) ein absorbierendes Element (17) umfasst, das dazu ausgestaltet ist, das Medium zu absorbieren.

3. Verbindungsanordnung nach Anspruch 1 oder 2, wobei mindestens einer unter dem ersten Abschnitt (10a) und dem zweiten Rohrleitungsabschnitt (10b) eine zylindrische Grundform aufweist und Innen- und Außenwände umfasst, die Wellungen (10d, 10d', 10d", 10e, 10e', 10e") aufweisen, wobei sich die Wellungen der Innenwand über ein Rohrleitungsteilstück erstrecken, das Wellungen der Außenwand aufweist.

4. Verbindungsanordnung nach einem der vorhergehenden Ansprüche, wobei das erste Material Invar ist und das zweite Material nichtrostender Stahl ist.

5. Verbindungsanordnung nach einem der vorhergehenden Ansprüche, wobei ein Vakuum in jeder der Wärmeisolierungskammern (12a, 12b, 13) erzeugt wird.

6. Verbindungsanordnung nach einem der vorhergehenden Ansprüche, wobei die maximale Einführdistanz (d1) des männlichen Endstücks (11a) in das weibliche Endstück (11b) kleiner als oder gleich 50 mm, bevorzugt kleiner als oder gleich 20 mm ist.

7. Verbindungsanordnung nach einem der vorhergehenden Ansprüche, wobei die Aufnahme ein Endvolumen eines Kanals (14a) ist, der die Ausdehnungskammer mit der Außenumgebung der Rohrleitung verbindet.

8. Verbindungsanordnung nach einem der vorhergehenden Ansprüche, wobei jeder der Rohrleitungsabschnitte (10a, 10b) eine an seinem Ende aufgeweitete Außenwand hat, um einen Kontaktendflansch zu bilden, der dazu ausgestaltet ist, gegenüber dem Kontaktendflansch des anderen Rohrleitungsabschnitts unter den Rohrleitungsabschnitten (10a, 10b) positioniert zu werden, und wobei die Aufnahme an der Basis des einen der Endflansche eingerichtet ist.

9. System zum Verteilen von flüssigem Wasserstoff, das eine Verbindungsanordnung (10) nach einem der Ansprüche 1 bis 8 umfasst.

10. Flugzeug (1), das eine Verbindungsanordnung (10) nach einem der Ansprüche 1 bis 8 oder eine System zum Verteilen nach Anspruch 9 umfasst.

## Claims

1. Connection assembly (10) between two portions (10a, 10b) of a supply line for a cryogenic fluid, the connection assembly (10) including a first line portion (10a) and a second line portion (10b), the first line portion (10a) including a male nozzle (11a) arranged to be at least partially inserted into a female nozzle (11b) of the second line portion (10b), said male and female nozzles (11a, 11b) together forming a tight sliding mechanical link, the first line portion (10a) being made of a first material with a coefficient of expansion lower than the coefficient of expansion of a second material used to make the second line portion (10b), the first line portion (10a) including a first thermal insulation chamber (12a) and the second line portion (10b) including a second thermal insulation chamber (12b), the connection assembly (10) being **characterized in that** it includes at least one additional thermal insulation chamber (13) that is separate from each of the first and second thermal insulation chambers (12a, 12b) and that extends between the first and second thermal insulation chambers (12a, 12b), and also includes an expansion chamber (14) for said fluid arranged about the contact surfaces (10c) between the first line portion (10a) and the second line portion (10b), the expansion chamber (14) being linked via a duct (14a) to a housing arranged for the housing or the connection of a presence sensor of said cryogenic fluid.

2. Connection assembly according to Claim 1, in which said fluid expansion chamber (14) has an absorbent element (17) configured to absorb said fluid.

3. Connection assembly according to Claim 1 or 2, in which at least one of the first line portion (10a) and the second line portion (10b) is generally cylindrical and has inner and outer walls with corrugations (10d, 10d', 10d", 10e, 10e', 10e"), the corrugations of the inner wall extending over a length of line with corrugations on the outer wall.

4. Connection assembly according to one of the preceding claims, in which the first material is invar and the second material is stainless steel.

5. Connection assembly according to any one of the preceding claims, in which a vacuum is created in each of said thermal insulation chambers (12a, 12b, 13).

6. Connection assembly according to any one of the preceding claims, in which the maximum insertion distance (d1) of the male nozzle (11a) into the female nozzle (11b) is equal to or less than 50 mm, preferably equal to or less than 20 mm.

7. Connection assembly according to any one of the preceding claims, in which said housing is a terminal volume of a duct (14a) linking said expansion chamber to the outside of the line.

8. Connection assembly according to any one of the preceding claims, in which the end of the outer wall of each of the line portions (10a, 10b) is flared to form a terminal contact flange that is configured to be positioned opposite the terminal contact flange of the other line portion of the line portions (10a, 10b), and in which said housing is arranged at the base of one of the terminal flanges.

9. Liquid hydrogen distribution system including a connection assembly (10) according to any one of Claims 1 to 8.

10. Aircraft (1) including a connection assembly (10) according to any one of Claims 1 to 8 or a distribution system according to Claim 9.
